(19) Europäisches Patentamt
European Patent Office
Office européen des brevets

(11) **EP 1 980 831 A1**

(12) **DEMANDE DE BREVET EUROPEEN**

(43) Date de publication:
**15.10.2008 Bulletin 2008/42**

(51) Int Cl.:
***G01K 11/00*** *(2006.01)*

(21) Numéro de dépôt: **07370007.2**

(22) Date de dépôt: **12.04.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(71) Demandeur: **UNIVERSITE DES SCIENCES ET TECHNOLOGIES DE LILLE**
**59655 Villeneuve-d'Ascq Cedex (FR)**

(72) Inventeurs:
• **Van de velde, Jean Claude**
**59130 Lambersart (FR)**

• **Constant, Eugène**
**59600 Villeneuve d'ascq (FR)**
• **Jonniau, Sylvain**
**59100 Roubaix (FR)**
• **Ringot, Roger**
**62840 Neuve-Chapelle (FR)**

(74) Mandataire: **Matkowska, Franck**
**Matkowska & Associés**
**9 Rue Jacques Prévert**
**59650 Villeneuve d'Ascq (FR)**

(54) **Thermomètre radiométrique**

(57) Le thermomètre radiométrique comporte un capteur (1) de microondes et des moyens électroniques de traitement du signal électrique délivré par ledit capteur. Lesdits moyens électroniques comportent :
- des moyens de préamplification (5) du signal électrique (S1) délivré par le capteur (1) de microondes,
- des moyens d'amplification (7) à gain variable et à commande automatique de gain, qui permettent l'amplification du signal délivré par les moyens de préamplification (5), lesdits moyens d'amplification (7) comportant un signal de commande automatique de gain (Vcag) qui permet l'ajustement automatique du gain à partir du signal de sortie (S7) des moyens d'amplification, et
- des moyens électroniques (8) de mesure de température permettant une mesure de température à partir dudit signal de commande automatique de gain (Vcag).

Fig.1

## Description

### Domaine technique

La présente invention concerne la mesure de température d'un corps par détection du rayonnement émis par ce corps, au moyen d'un nouveau thermomètre radiométrique. Elle trouve de préférence, mais non exclusivement, son application à la mesure non invasive de la température de tissus biologiques, et notamment à la mesure de la température d'un corps humain.

### Art antérieur

Il existe à ce jour différents types de radiomètres, qui sont utilisés pour mesurer à distance la température d'une région, et par exemple la température moyenne des tissus biologiques d'un corps humain, par détection de la puissance de bruit thermique émise par cette région. Ces thermomètres radiométriques comportent un capteur d'ondes hyperfréquences ou microondes (généralement dans le domaine 0,5 à 20 GHz), tel que par exemple une antenne ou une sonde.
Ce capteur, désigné dans le présent texte, « capteur de microondes », délivre un signal de sortie dont la puissance est fonction de ladite température. Ce signal de sortie est traité par des moyens électroniques qui comportent généralement un détecteur de puissance fonctionnant dans sa zone quadratique, afin de délivrer une grandeur électrique directement proportionnelle à la puissance du signal, et donc à la température.
La sensibilité moyenne d'un tel détecteur de puissance est dans le meilleur des cas de -60 dBm, ce qui en pratique nécessite de mettre en oeuvre une très forte amplification (en pratique une amplification d'au moins 80dB). Il en résulte des risques d'oscillations importants, et ce type de solution technique implique des coûts de réalisation élevés, qui la rendent incompatible pour une application grand public.

### Objectifs de l'invention

La présente invention vise à proposer un nouveau thermomètre radiométrique dont le coût de fabrication est faible, et qui est de ce fait adapté à des applications grand public.

### Résumé de l'invention

Le thermomètre radiométrique de l'invention comporte un capteur de microondes et des moyens électroniques de traitement du signal électrique délivré par ledit capteur. Lesdits moyens électroniques comportent :

- des moyens de préamplification du signal électrique délivré par le capteur de microondes,
- des moyens d'amplification à gain variable et à commande automatique de gain, qui permettent l'amplification du signal délivré par les moyens de préamplification, lesdits moyens d'amplification comportant un signal de commande automatique de gain qui permet l'ajustement automatique du gain à partir du signal de sortie des moyens d'amplification, et
- des moyens électroniques de mesure de température permettant une mesure de température à partir dudit signal de commande automatique de gain.

Le gain des moyens de préamplification du thermomètre radiométrique de l'invention est suffisamment élevé pour que la puissance du signal à l'entrée des moyens d'amplification à gain variable soit toujours trop importante et fasse systématiquement réagir la commande de gain automatique en diminuant le gain des moyens d'amplification à gain variable. Ainsi, lorsqu'un rayonnement électromagnétique est détecté par le capteur de microondes, le signal de commande automatique de gain varie en sorte d'ajuster automatiquement le gain des moyens d'amplification à gain variable. L'invention repose sur le constat nouveau que cette variation du signal de commande automatique de gain est en première approximation proportionnelle à la variation de puissance du signal délivré par le capteur de micro-ondes, et de ce fait peut être avantageusement utilisée pour mesurer la température du corps ou de la région ayant émis le rayonnement.
Plus particulièrement, et de manière facultative selon l'invention, le thermomètre radiométrique de l'invention met en oeuvre les caractéristiques additionnelles et facultatives ci-après, prises isolément ou en combinaison les unes avec les autres :

(a) les moyens d'amplification à gain variable et à commande automatique de gain comportent un amplificateur logarithmique ;

(b) le thermomètre radiométrique comporte une source de bruit thermique comportant une charge résistive associée à un générateur de courant qui est commandé par les moyens électroniques de mesure de température, et qui est apte à débiter un courant (I0) dans la charge résistive, et un commutateur, qui est commandé par les moyens électroniques de mesure de température, et qui permet de relier l'entrée des moyens de préamplification soit à la sortie du capteur de microondes, soit à la source de bruit thermique ; les moyens électroniques de mesure de température sont conçus pour commander la source de courant de manière à ce que la charge résistive puisse être portée à deux températures de référence différentes : une première température de référence (T1) en l'absence de courant dans la charge résistive, et une deuxième température de référence (T2) lorsque la charge résistive est traversée par le courant débité par la source de courant ;

(c) les moyens électroniques de mesure de température sont conçus pour effectuer une mesure de température en mettant en oeuvre les trois phases successives suivantes :

Phase 0: commande du commutateur afin de relier la sortie du capteur de microondes à l'entrée des moyens de préamplification, et échantillonnage pendant une durée t0 prédéfinie du signal de commande automatique de gain (Vcag)

Phase 1 : commande du commutateur afin de relier la source de bruit thermique à l'entrée des moyens de préamplification, et échantillonnage pendant une durée t1 prédéfinie du signal de commande automatique de gain (Vcag), la source de courant ne débitant pas de courant dans la charge résistive de la source de bruit thermique,

Phase 2 : commande du générateur de courant de manière à ce que celui-ci débite dans la charge résistive de la source de bruit thermique un courant continu d'intensité constante I0, et échantillonnage pendant une durée t2 prédéfinie du signal de commande automatique de gain (Vcag) ;

(d) les moyens électroniques de mesure de température sont conçus pour calculer une valeur VX à partir des échantillons $V_{x,i}$ issus de l'échantillonnage de la première phase (phase 0), une valeur V1 à partir des échantillons $V_{1,i}$ issus de l'échantillonnage de la deuxième phase (phase 1), une valeur V2 à partir des échantillons $V_{2,i}$ issus de l'échantillonnage de la troisième phase (phase 2), et pour calculer une température Tx à partir des valeurs VX, V1 et V2, et des deux températures de référence T1 et T2 de la source de bruit thermique ; plus particulièrement, les moyens électroniques de mesure de température sont par exemple conçus pour calculer une température Tx au moyen de la formule suivante : $Tx=T1+(T2-T1).(VX-V1)/(VX-V2)$.

(e) les moyens électroniques de mesure de température sont de préférence conçus pour réitérer les trois phases plusieurs fois, et pour calculer une température moyenne à partir des valeurs de température TX calculées pour chaque itération ;

(f) dans une variante préférée de réalisation, la charge résistive comporte une résistance constituée par une couche de NiCr déposée sur un substrat en verre, et deux plots de métallisation en or déposés sur ledit substrat et en contact avec ladite couche de NiCr ;

(g) le temps de montée ou descente en température de la source de bruit thermique entre les deux températures de référence T1 et T2 est inférieur à 50ms et de préférence inférieur à 25ms.

Les caractéristiques (b) à (g) ci-dessus peuvent également avantageusement être mises en oeuvre dans tout type de radiomètre thermique connu, indépendamment des caractéristiques techniques principales de la revendication 1, et ne sont pas dans ce cas combinées à la mise en oeuvre d'une commande automatique de gain et à l'utilisation du signal de commande automatique de gain pour la mesure de température.

L'invention a également pour objet l'utilisation du thermomètre radiométrique visé précédemment, pour mesurer de manière non invasive la température de tissus biologiques, et notamment la température d'un corps humain.

Un autre objet de l'invention est constitué par une source de bruit thermique à faible inertie thermique, destinée à être mise en oeuvre dans un thermomètre radiométrique, quelle que soit la structure de ce thermomètre radiométrique, et comportant l'une et /ou l'autre des caractéristiques (b) à (h) précitées.

## Brève description des dessins

D'autres caractéristiques et avantages de l'invention apparaîtront plus clairement à la lecture de la description détaillée ci-après d'une variante préférée de réalisation de l'invention, laquelle description est donnée à titre d'exemple non limitatif et non exhaustif de l'invention, et en référence aux dessins annexés sur lesquels :

- la figure 1 est un schéma synoptique d'un thermomètre radiométrique de l'invention,
- la figure 2 est une représentation en perspective d'une charge résistive à faible inertie thermique pouvant avantageusement être mise en oeuvre dans un thermomètre radiométrique de l'invention, pour constituer une source de bruit thermique.

**Description détaillée**

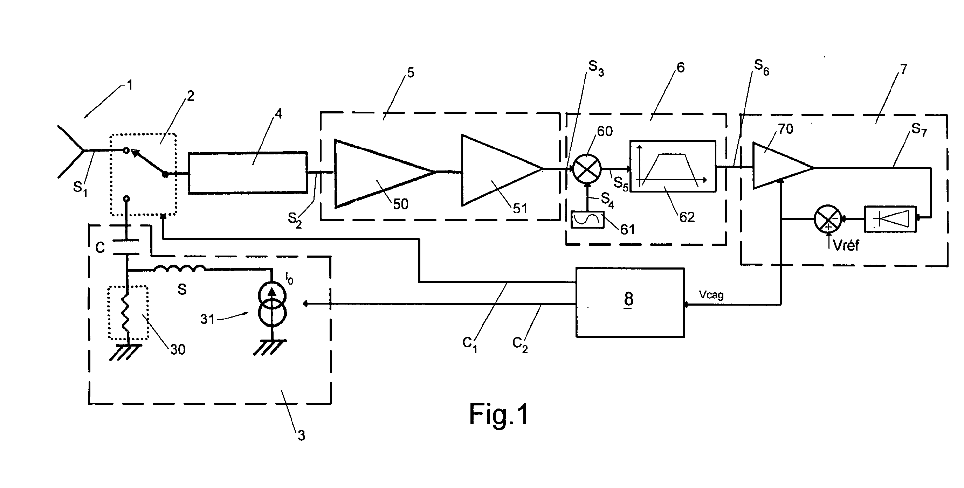

En référence à la figure 1, on a représenté un exemple de thermomètre radiométrique conforme à l'invention, et permettant de mesurer de manière non invasive la température moyenne d'un corps, à partir du rayonnement électromagnétique microonde émis par ledit corps.

Structure du thermomètre radiométrique

Ce thermomètre radiométrique comporte une antenne 1 permettant de capter ledit rayonnement électromagnétique microonde. Cette antenne 1 pourrait également être remplacée par une sonde. L'antenne 1 délivre un signal électrique de sortie S1, dont la puissance P est fonction de la température du corps ayant émis le rayonnement électromagnétique capté par l'antenne.

Ce signal de sortie S1 est traité par des moyens électroniques, qui sont spécifiques de l'invention, et dont une variante de réalisation va à présent être détaillée en référence à figure 1.

Ces moyens électroniques comportent :

- une source de bruit thermique blanc gaussien 3,
- une ligne unidirectionnelle 4,
- un commutateur 2 à deux positions permettant de relier la ligne unidirectionnelle 4 soit à la sortie de l'antenne 1, soit à la source de bruit thermique 3,
- des moyens de préamplification 5 du signal électrique S2 transitant par la ligne unidirectionnelle 4,
- des moyens 6 de type superhétérodyne, permettant une transposition de fréquences du signal préamplifié S3,
- des moyens d'amplification 7 à gain variable et à commande automatique de gain, pour l'amplification du signal S3,
- une unité électronique de traitement et de commande 8, qui permet d'effectuer une mesure automatique de température à partir du signal continu de commande automatique de gain (Vcag) des moyens d'amplification 7, et qui délivre en sortie deux signaux électriques de commande C1 et C2.

Le couplage de l'antenne 1 avec le corps sous investigation dont on souhaite mesurer la température peut se faire directement au contact avec le matériau constitutif dudit corps, afin de mieux s'affranchir des rayonnements parasites. De ce fait l'antenne 1 peut être du type « strip-slot » et ses dimensions sont optimisées non seulement en fonction de la fréquence de travail, mais également en fonction de la nature du matériau sous investigation (homogène ou stratifié) de façon à rendre le coefficient de réflexion antenne-matériau le plus faible possible. L'antenne 1 est de préférence réalisée sur un matériau à faibles pertes diélectriques (par exemple verre époxy type FR4,kapton), afin de minimiser l'incidence de la température physique de l'antenne. En outre sa masse thermique est de préférence la plus faible possible pour minimiser le gradient thermique antenne -matériau, et le temps d'équilibre thermique antenne-corps sous investigation.

Le couplage de l'antenne 1 avec le corps sous investigation peut également se faire sans contact .Cela nécessite d'effectuer la mesure dans une enceinte métallique fermée avec une antenne adaptée à l'espace libre.

Le commutateur 2 est commandé par l'unité électronique 8 au moyen du signal de commande C1, et peut indifféremment selon l'invention être réalisé avec des composants actifs (FET, diodes PIN) ou passifs tels que des microsystèmes électromécaniques. On utilise de préférence un commutateur hyperfréquence SP2T, de telle sorte que le commutateur voie rigoureusement la même charge durant les phases 1 et 2 décrites ci-après, ce qui contribue à diminuer les risques d'erreurs occasionnées par les variations d'adaptation, ainsi que les erreurs occasionnées par des variations de coefficient de transmission.

La source de bruit thermique 3 comporte principalement une charge résistive 30 à faible inertie thermique, associée à un générateur de courant 31 qui est commandé par l'unité électronique 8 au moyen du signal de commande C2. Afin de bien isoler la partie hyperfréquence du continu lorsque la source de courant 31 débite dans la charge 30, le couplage de la source de bruit thermique 3 avec le commutateur est réalisé l'aide d'un T de polarisation constitué d'une self S et d'une capacité C.

La commande du commutateur 2 et de la source de bruit thermique 3 par l'unité électronique 8, ainsi qu'un exemple préféré de réalisation de la charge 30 seront détaillés ultérieurement.

Dans l'exemple particulier de réalisation de la figure 1, les moyens de préamplification 5 comportent deux amplificateurs faible bruit 50, 51 en cascade. Ceci n'est pas limitatif de l'invention. Dans une autre variante de réalisation, ces moyens de préamplification 5 pourraient comporter un unique amplificateur faible bruit ou plus de deux amplificateurs faible bruit en cascade.

La transposition de fréquences du signal de sortie S3 délivré par les moyens de préamplification 5, vers des fréquences intermédiaires plus basses et avantageusement plus faciles à traiter, est obtenue en effectuant, au moyen d'un mélangeur 60, le produit de ce signal S3 avec un signal sinusoïdal S4 de fréquence fixe F prédéfinie délivré par un oscillateur local 61 verrouillé en phase (typiquement PLL). Un signal S6 à fréquences intermédiaires (FI) plus basses est obtenu après filtrage du signal S5 en sortie du mélangeur 60, au moyen d'un filtre passe-bande 62 de bande passante ΔF prédéfinie.

Le choix de la fréquence F dépend de l'application visée pour le thermomètre radiométrique, et notamment de la permittivité du matériau dont on souhaite mesurer la température et de la profondeur d'investigation souhaitée dans ce matériau pour la mesure de température. Elle sera donc fixée judicieusement par homme du métier au cas par cas en fonction de l'application visée.

A titre d'exemple, une fréquence F de l'ordre de 1,575GHz est un bon compromis pour la mesure de la température des tissus biologiques d'un corps humain sur une profondeur d'investigation de l'ordre de 2cm.

La puissance P du signal S6 en sortie du filtre passe bande 62 est reliée à la température du corps ayant émis le rayonnement électromagnétique par la relation suivante :

$$(1) \quad P = k.T.\Delta F$$

Avec:

k : constante de Boltzmann,
ΔF : bande passante du filtre 62

Pour que la mesure de température ne soit pas perturbée par d'autres fréquences parasites, la bande passante ΔF du filtre 62 doit de préférence être la plus faible possible. On choisira par exemple une bande passante de 2Mhz (par exemple : fréquence basse du filtre 62 égale à 4MHz ; fréquence haute du filtre 62 égale à 6MHz).

Les moyens d'amplification 7 à gain variable et à commande automatique de gain comportent un amplificateur 70 à gain variable (G2), présentant une grande dynamique de gain (par exemple de l'ordre de 60dB). Cet amplificateur 70 est de préférence un amplificateur logarithmique à gain variable.

Le gain G2 de cet amplificateur 70 est ajusté automatiquement par un signal continu de commande automatique de gain (Vcag), qui est obtenu de manière connue en soi à partir du signal de sortie S7 de amplificateur 70 et d'une tension de consigne (Vref). Cette régulation automatique de gain permet de maintenir en sortie de la chaîne d'amplification un niveau de signal S7, fixé par la consigne Vref, et indépendant du niveau du signal S6 appliqué à son entrée.

Pour réaliser à faible coût la chaîne de traitement électronique constituée par le deuxième amplificateur faible bruit 51, les moyens de transposition de fréquence 6, et les moyens d'amplification 7 à gain variable et à commande automatique de gain, on peut utiliser de manière avantageuse un composant standard du marché, tel que le composant GPS commercialisé par la société MAXIM INTEGRATED PRODUCTS, sous la référence « MAX2745 ».

Le gain G1 des moyens de préamplification 5 à la fréquence précitée F est fixé à une valeur suffisamment élevée pour qu'une variation minimum de température que l'on souhaite pouvoir détecter (par exemple ΔT égale 1°C) se traduise par une variation de la puissance d'entrée du signal S6 faisant réagir la commande automatique de gain (diminution automatique du gain G2 pour maintenir le signal S7 à un niveau fixé par la consigne Vref).

Dans ces conditions, le signal de commande automatique de gain Vcag est en première approximation proportionnel à la la puissance du signal vu par l'antenne 1, et de ce fait à la température Tx du corps ayant émis le rayonnement électromagnétique capté par l'antenne 1. Ce signal (Vcag) de commande automatique de gain peut ainsi être avantageusement utilisé pour la mesure de température du corps ayant émis le rayonnement électromagnétique capté par l'antenne 1.

Dans la variante de réalisation de la figure 1, ce traitement du signal (Vcag) pour la mesure de température est assuré par l'unité électronique 8.

Cette unité électronique 8 de traitement et de commande est de préférence une unité électronique programmée, comportant par exemple un microprocesseur ou un microcontrôleur apte à exécuter un programme de mesure de température implanté dans une mémoire. Elle peut néanmoins également être réalisée au moyen d'un circuit électronique spécifique de type ASIC, FPGA, ...

Quelle que soit son architecture, cette unité électronique 8 de traitement et de commande est conçue pour effectuer une mesure de température, en générant les signaux de commande C1 et C2 du commutateur 2 et du générateur de courant 3, selon une séquence prédéfinie comportant les trois phases successives décrites ci-après.

Phase 0 :

L'unité électronique 8 commande le commutateur 2 au moyen du signal C1 en sorte de relier la sortie de l'antenne 1 servant à capter le rayonnement électromagnétique émis par le corps sous investigation à la ligne unidirectionnelle 4 du thermomètre radiométrique.

Tel que précédemment expliqué, le signal Vcag de commande automatique de gain est proportionnel à la température Tx du corps sous investigation, émettant le rayonnement électromagnétique capté par l'antenne. Ce signal Vcag s'apparente à un bruit blanc gaussien de valeur moyenne non nulle, proportionnelle à Tx, et d'écart type donné.

Ce signal Vcag est échantillonné par l'unité électronique 8 à une fréquence d'échantillonnage prédéfinie Fe (par exemple 1 kHz) pendant une durée t0 prédéfinie (durée de la phase 0), puis est converti numériquement et est sauvegardé en mémoire en vue d'être traité ultérieurement. Les valeurs numériques de ce signal Vcag pendant la phase 0 seront désignées $V_{x,i}$

Phase 1 :

L'unité électronique 8 commande le commutateur 2 au moyen du signal C1, en sorte de le faire basculer dans l'autre position, c'est-à-dire de telle sorte que la ligne unidirectionnelle 4 du thermomètre radiométrique soit à présent reliée à la charge 30 portée à une température T1, ce qui a pour conséquence de générer un signal Vcag.

Cette température T1 est connue et mesurée à l'aide d'un capteur de température électronique situé au plus près la résistance 30, de la ligne unidirectionnelle 4, et du commutateur 2, ceci afin de minimiser les gradients de température entre ces composants.

Le signal Vcag pendant cette phase 2 s'apparente à un bruit blanc gaussien de valeur moyenne non nulle, proportionnelle à la température T1, et d'écart type donné.

Ce signal est échantillonné à la fréquence Fe pendant une durée t1 prédéfinie (durée de la phase 1), puis est converti numériquement et est sauvegardé en mémoire en vue d'être traité ultérieurement. Les valeurs numériques de ce signal Vcag pendant la phase 1 seront désignées $V_{1,i}$

Phase 2 :

Durant toute cette phase, l'unité électronique 8 commande le générateur de courant 31 au moyen du signal de commande C1. Il en résulte que ce générateur 31 débite dans la charge 30 un courant continu d'intensité constante I0, qui permet à la charge 30 de dissiper une puissance électrique constante et de la porter à une température T2=T1+$\Delta$T.

La variation de température $\Delta$T est connue, et dépend des caractéristiques intrinsèques de la charge 30 et de l'intensité I0 du courant. Par exemple, lorsque la charge 30 est constituée par une résistance de valeur R1 réalisée sur un substrat, la variation de température $\Delta$T est donnée par la relation suivante :

$$(2) \qquad \Delta T = Rth.R1.I0^2$$

Rth: résistance thermique du substrat sur lequel est réalisé la résistance
R1 : résistance en ohms
I0 : Intensité du courant en mA

La charge résistive 30 est dimensionnée pour un courant d'intensité I0 donné de telle sorte que la différence de température $\Delta$T entre les températures de référence T1 et T2 soit supérieure à une valeur minimale prédéfinie, qui dépend de l'application visée pour le thermomètre radiométrique.

Pendant la phase 2, on obtient comme précédemment un signal Vcag qui s'apparente à un bruit blanc gaussien de valeur moyenne non nulle, proportionnelle à la température T2, et d'écart type donné. Ce signal est échantillonné à la fréquence Fe pendant une durée t2 prédéfinie (durée de la phase 3), puis est converti numériquement et est sauvegardé en mémoire en vue d'être traité ultérieurement. Les valeurs numériques de ce signal Vcag pendant la phase 2 seront désignées $V_{2,i}$

Calcul de la température

A l'issue des trois phases précitées, l'unité électronique 8 calcule dans un premier temps :

- une valeur VX à partir des échantillons $V_{x,i}$,
- une valeur V1 à partir des échantillons $V_{1,i}$,

EP 1 980 831 A1

- une valeur V2 à partir des échantillons $V_{2,i}$,

puis dans un deuxième temps calcule la température Tx du corps sous investigation en utilisant la formule suivante :

$$(3) \qquad Tx=T1+\varDelta T.(VX-V1)/(VX-V2)$$

Pour l'application de cette formule (3), on considère que les mesures pendant les phases 0, 1 et 2 précitées ont été faites suffisamment rapidement pour qu'entre chacune des phases 0 à 2, on puisse considérer que le gain de la chaîne de traitement électronique n'a pas bougé.

Le calcul des valeurs VX, V1 et V2 consiste par exemple à calculer la valeur moyenne des échantillons numériques (respectivement $V_{x,i}$, $V_{1,i}$ $V_{2,i}$) par simple intégration numérique. D'autres méthodes de calcul de VX, V1 et V2 à partir des échantillons numériques $V_{x,i}$, $V_{1,i}$ $V_{2,i}$ peuvent être envisagées par l'homme du métier.

De préférence, afin d'obtenir une meilleure estimation de chacune des grandeurs VX, V1, V2, en réduisant au mieux leur écart type, les phases 0 à 2 et le calcul de Tx au moyen de la formule (3) sont répétés successivement N fois, ce qui permet d'obtenir une valeur moyenne de TX plus précise. Par exemple, avec une fréquence d'échantillonnage Fe de 1kHz, un nombre d'échantillons acquis pendant chaque phase 0 à 2 valant 50, et un nombre d'itérations N des phases 0 à 2 valant 40, on peut effectuer une mesure de température moyenne TX environ toutes les 6 secondes.

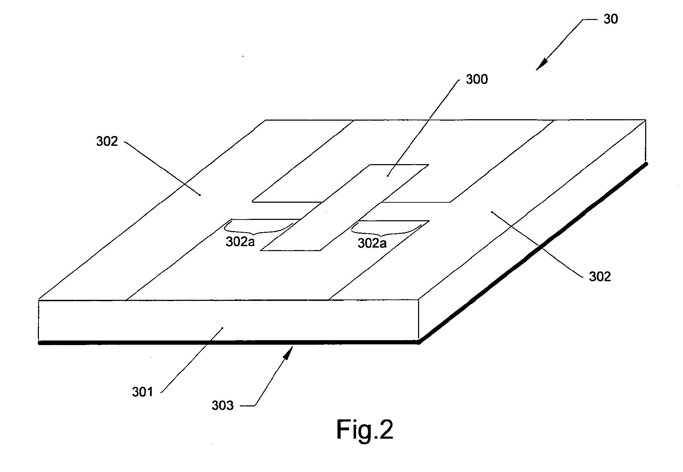

Exemple de réalisation la charge 30 - Figure 2

On a représenté sur la figure 2, un exemple préféré de réalisation d'une charge résistive 30 pouvant être utilisée pour réaliser la source 3 de bruit thermique.

D'une manière générale, et quelle que soit la structure de cette charge, il est préférable que la charge 30 présente une très faible inertie thermique, ce qui permet avantageusement d'obtenir des temps rapides de montée en température (pour atteindre température T2 lorsque la source de courant 31 débite dans la charge 30) et de descente en température (pour atteindre la température T1 lorsque la source de courant 31 ne débite plus dans la charge 30). Il est important que ces temps de montée et de descente en température soient faibles, afin de réduire les durées transitoires entre chaque phase précitée 0 à 2. Cela permet également de réduire avantageusement la consommation électrique de la source 31.

De préférence, l'inertie thermique de la charge résistive 30 est suffisamment faible pour que le temps de montée ou descente en température de source de bruit thermique entre les deux températures de référence T1 et T2 est inférieur à 50ms et de préférence inférieur à 25ms.

Le choix des températures de référence T1 et T2 dépend de l'application visée par le thermomètre radiométrique. De préférence, mais non nécessairement, afin de réduire les erreurs de mesure de température Tx, l'homme du métier fixera les températures de référence T1 et T2 de telle sorte que la température TX mesurée soit comprise entre T1 et T2. De manière non limitative de l'invention, lorsque le thermomètre radiométrique est conçu pour mesurer la température corporelle d'un corps humain, on fixera par exemple T1 à environ 10°C et T2 à environ 50°C , soit une différence de température ΔT (ΔT= T2- T1) de l'ordre de 40°C.

En référence à la figure 2, dans un exemple préféré de réalisation, la charge résistive 30 comporte une résistance 300 réalisée sous la forme d'une couche de NiCr, qui est déposée sur la face supérieure d'un substrat de verre 301. Sur la face inférieure du substrat 301, est en outre déposée une couche de métallisation 303, par exemple en or.

Pour la connexion électrique de la résistance 300, des plots de métallisation 302, par exemple en or, sont réalisés par dépôt sur la face supérieure du substrat 300. Les accès continus 302a de ces plots 302 sont conçus afin d'augmenter la résistance thermique de la liaison avec la résistance 300, ce qui permet d'éviter la création de puits thermiques et permet de dissiper la puissance électrique uniquement au sein de la résistance 300.

A titre d'exemple non limitatif de l'invention, la résistance 300 présentait une résistance carrée d'environ 100 Ohms. La source de courant 31 était conçue pour débiter un courant d'intensité I0 égale à 15mA. Le temps de montée en température ou de descente en température, de la charge résistive 30 valait environ 20ms, pour une différence de température ΔT (ΔT= T2- T1) de l'ordre de 40°C.

Le thermomètre radiométrique de l'invention peut être utilisé dans toutes les applications de mesure non invasive de température d'un corps, quels que soit la structure et le ou les matériaux constitutifs de ce corps. Par exemple, et de manière non exhaustive et non limitative de l'invention, le thermomètre radiométrique de l'invention peut être utilisé dans le domaine médical pour une mesure non invasive de la température de tissus biologiques, et notamment du corps humain, ou dans le domaine agroalimentaire pour une mesure non invasive de la température d'aliments.

**Revendications**

1. Thermomètre radiométrique comportant un capteur (1) de microondes et des moyens électroniques de traitement du signal électrique délivré par ledit capteur, **caractérisé en ce que** lesdits moyens électroniques comportent des moyens de préamplification (5) du signal électrique (S1) délivré par le capteur (1) de microondes, des moyens d'amplification (7) à gain variable et à commande automatique de gain, qui permettent l'amplification du signal délivré par les moyens de préamplification (5), lesdits moyens d'amplification (7) comportant un signal de commande automatique de gain (Vcag) qui permet l'ajustement automatique du gain à partir du signal de sortie (S7) des moyens d'amplification, et des moyens électroniques (8) de mesure de température permettant une mesure de température à partir dudit signal de commande automatique de gain (Vcag).

2. Thermomètre radiométrique selon la revendication 1, **caractérisé en ce que** les moyens d'amplification (7) à gain variable et à commande automatique de gain comportent un amplificateur logarithmique (70).

3. Thermomètre radiométrique selon la revendication 1 ou 2, **caractérisé en ce qu'**il comporte une source de bruit thermique (3) comportant une charge résistive (30) associée à un générateur de courant (31) qui est commandé par les moyens électroniques (8) de mesure de température, et qui est apte à débiter un courant (I0) dans la charge résistive (30), et un commutateur (2), qui est commandé par les moyens électroniques (8) de mesure de température, et qui permet de relier l'entrée des moyens de préamplification (5) soit à la sortie du capteur de microondes (1), soit à la source de bruit thermique (3), et **en ce que** les moyens électroniques (8) de mesure de température sont conçus pour commander la source de courant (31) de manière à ce que la charge résistive (30) puisse être portée à deux températures de référence différentes : une première température de référence (T1) en l'absence de courant dans la charge résistive (30), et une deuxième température de référence (T2) lorsque la charge résistive (30) est traversée par le courant débité par la source de courant (31).

4. Thermomètre radiométrique selon la revendication 3, **caractérisé en ce que** les moyens électroniques (8) de mesure de température sont conçus pour effectuer une mesure de température en mettant en oeuvre les trois phases successives suivantes :

   Phase 0 : commande du commutateur (2) afin de relier la sortie du capteur de microondes (1) à l'entrée des moyens de préamplification (5), et échantillonnage pendant une durée t0 prédéfinie du signal de commande automatique de gain (Vcag)
   Phase 1 : commande du commutateur (2) afin de relier la source de bruit thermique (3) à l'entrée des moyens de préamplification (5), et échantillonnage pendant une durée t1 prédéfinie du signal de commande automatique de gain (Vcag), la source de courant ne débitant pas de courant dans la charge résistive (30) de la source de bruit thermique (3),
   Phase 2 : commande du générateur de courant (31) de manière à ce que celui-ci débite dans la charge résistive (30) de la source de bruit thermique (3) un courant continu d'intensité constante I0, et échantillonnage pendant une durée t2 prédéfinie du signal de commande automatique de gain (Vcag).

5. Thermomètre radiométrique selon la revendication 4, **caractérisé en ce que** les moyens électroniques (8) de mesure de température sont conçus pour calculer une valeur VX à partir des échantillons $V_{x,i}$ issus de l'échantillonnage de la première phase (phase 0), une valeur V1 à partir des échantillons $V_{1,i}$ issus de l'échantillonnage de la deuxième phase (phase 1), et une valeur V2 à partir des échantillons $V_{2,i}$ issus de l'échantillonnage de la troisième phase (phase 2), et pour calculer une température Tx à partir des valeurs VX, V1 et V2, et des deux températures de référence T1 et T2 de la source de bruit thermique.

6. Thermomètre radiométrique selon la revendication 5, **caractérisé en ce que** les moyens électroniques (8) de mesure de température sont conçus pour calculer une température Tx au moyen de la formule suivante :

$$Tx = T1 + (T2-T1).(VX-V1)/(VX-V2)$$

7. Thermomètre radiométrique selon la revendication 5 ou 6, **caractérisé en ce que** les moyens électroniques (8) de mesure de température sont conçus pour réitérer les trois phases 0 à 2 plusieurs fois, et pour calculer une température moyenne à partir des valeurs de température TX calculées pour chaque itération.

**8.** Thermomètre radiométrique selon l'une des revendications 3 à 7, **caractérisé en ce que** la charge résistive (30) comporte une résistance constituée par une couche de NiCr déposée sur un substrat en verre, et deux plots de métallisation en or déposés sur ledit substrat et en contact avec ladite couche de NiCr.

**9.** Thermomètre radiométrique selon l'une des revendications 3 à 8, **caractérisé en ce que** le temps de montée ou descente en température de source de bruit thermique entre les deux températures de référence T1 et T2 est inférieur à 50ms et de préférence inférieur à 25ms.

Fig.1

Fig.2

**Office européen
des brevets**

**RAPPORT DE RECHERCHE EUROPEENNE**

Numéro de la demande

EP 07 37 0007

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 56 108947 A (MITSUBISHI ELECTRIC CORP) 28 août 1981 (1981-08-28) * abrégé * ----- | 1-9 | INV. G01K11/00 |

DOMAINES TECHNIQUES RECHERCHES (IPC)

G01K

Le présent rapport a été établi pour toutes les revendications

| Lieu de la recherche | Date d'achèvement de la recherche | Examinateur |
|---|---|---|
| La Haye | 10 septembre 2007 | Bagnera, Carlo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 37 0007

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-09-2007

| Document brevet cité au rapport de recherche | Date de publication | Membre(s) de la famille de brevet(s) | Date de publication |
|---|---|---|---|
| JP 56108947 A | 28-08-1981 | AUCUN | |

EPO FORM P0460

Pour tout renseignement concernant cette annexe : voir Journal Officiel de l'Office européen des brevets, No.12/82